# FASCICULE DE BREVET EUROPEEN

(11) **EP 2 773 067 B1**
(45) Date de publication et mention de la délivrance du brevet: **07.08.2019**
(21) Numéro de dépôt: 14000671.9
(22) Date de dépôt: 26.02.2014
(51) Int. Cl.: H04L 12/24, H04L 29/06

(54) **PROCÉDÉ DE FIABILISATION DE LA GÉNÉRATION DE MESSAGES D'ALERTE SUR UN RÉSEAU SYNCHRONISÉ DE DONNÉES**
VERFAHREN ZUR ERHÖHUNG DER ZUVERLÄSSIGKEIT DER ERZEUGUNG VON WARNMELDUNGEN IN EINEM SYNCHRONISIERTEN DATENNETZ
METHOD FOR IMPROVING THE RELIABILITY OF ALERT MESSAGE GENERATION ON A SYNCHRONISED DATA NETWORK

(30) Priorité: 01.03.2013 FR 1351844
(43) Date de publication de la demande: 03.09.2014
(73) Titulaire: Cassidian CyberSecurity SAS, 78990 Elancourt (FR)
(72) Inventeur: Mascart, Julien, 78000 Versailles (FR); Rossigneux, Valérian, 78180 Montigny le Bretonneux (FR)
(74) Mandataire: Cabinet Camus Lebkiri

(56) Documents cités:
- US-A1- 2005 262 233
- US-A1- 2006 274 703
- US-A1- 2011 154 367

## Description

### DOMAINE

Le domaine de l'invention concerne le domaine des procédés et systèmes de supervision d'un réseau et des actions menées sur ce réseau notamment en vue de garantir leur sécurité. L'invention se rapporte aux procédés permettant d'identifier des alertes émises d'équipements d'un réseau pour la sécurisation de ce dernier et procédés permettant d'améliorer le taux de fausses alertes de messages de supervision.

### ETAT DE L'ART

Actuellement, les outils de supervision des infrastructures réseaux tels que des réseaux d'entreprises ou d'administrations ou d'une communauté donnée sont de plus en plus complexes.

Selon un premier aspect, la complexité résulte du nombre d'équipements croissants s'interfaçant et accédant à un réseau donné. Actuellement, les équipements concernés par l'accès à un réseau donné concernent :
- les équipements nomades tes que les Smartphones, tablettes ;
- les ordinateurs, stations de travail, ordinateurs portables ;
- les équipements supportant le réseau tels que les commutateurs Switchs, les routeurs, les serveurs d'administration, etc.

Le nombre croissant d'équipements implique une complexité accrue du nombre de messages de supervision à traiter.

Un autre aspect concerne la qualité de service du réseau qui vise notamment une amélioration de la fiabilité et de la sécurité du réseau et implique naturellement une augmentation de la complexité des outils d'administration de manière à barrer à toute faille d'un système.

L'amélioration de la fiabilité sécurité du réseau est d'autant plus importante que le nombre de points entrants dans le réseau augmentent avec le nombre d'équipements évoqués dans le premier aspect.

L'amélioration de la fiabilité sécurité du réseau répond à l'exigence d'une diminution des vulnérabilités du réseau, sur le plan des applications, des protocoles de transmission, des intrusions par un piratage d'une clef cryptée ou d'un mot de passe d'un utilisateur par exemple.

Un danger est de laisser une personne non autorisée pénétrer un réseau dans l'objectif de nuire, par exemple en effaçant des données ou en volant des informations confidentielles.

Du fait de cette complexité, les outils ont intégré des corrélateurs permettant de traiter de manière semi-automatique ou automatique des évènements survenant au sein du réseau.

Les corrélateurs sont capables de gérer un ensemble d'évènements en analysant par exemple, leur nombre, leur redondance, leur nature, une séquence attendue d'un ensemble d'entre eux, les dates de réception, les émetteurs et les destinataires, etc.

Ces corrélateurs sont capables d'assister l'homme dans sa prise de décision en filtrant et en synthétisant tous les évènements émis.

Les corrélateurs prennent de plus en plus les aspects de sécurité en compte en identifiant des anomalies ou des irrégularités dans la réception des messages reçus.

Il existe différents types de solutions permettant de détecter de telles anomalies. En premier lieu, notons la solution HIDS, dont l'acronyme dans la terminologie anglo-saxonne signifie « Host Intrusion Détection System » qui permet de relever les modifications d'un système notamment pour la détection d'activités anormales, des écarts de politique de sécurité.

En second lieu, la solution NIDS, dont l'acronyme anglo-saxon signifie « Network Intrusion Détection System » permet de détecter des messages dits « malicieux » ou vérolés parmi les messages transitant dans le réseau.

Une troisième solution consiste à utiliser un pare-feu permettant de détecter l'utilisation de ports de transmissions non autorisés sur un lien donné.

Chaque solution envisagée comprend un mécanisme commun d'émission de messages d'alertes lorsqu'un tel évènement survient mettant potentiellement en danger la sécurité du réseau ou des informations y transitant. On trouve par exemple des solutions telles que des journaux d'évènements des systèmes d'exploitation ou d'applications ou les messages émis ne sont pas nécessairement des alertes mais des notifications d'évènements. On trouve de nombreuses solutions comprenant un tel mécanisme d'émission de notifications telles que des pare-feu, des anti-virus et d'autres solutions.

Dans les réseaux comprenant des contraintes temps-réel, tels que les réseaux synchronisés par exemple, les messages sont généralement horodatés. Cet horodatage permet notamment d'améliorer les protocoles de routages ou les problématiques de synchronisation d'un réseau. L'horodatage des messages n'est pas utilisé par les équipements de supervision d'un réseau, car un corrélateur d'évènements utilise éventuellement la date d'arrivée du message pour prendre une décision. Ceci permet de classer les messages chronologiquement, d'effectuer des analyses et prendre les décisions adéquates lorsqu'une faille de sécurité est détectée par exemple. US2006274703 décrit un procédé de filtrage de données de transaction. Le procédé décrit fait usage d' horodatage de données reçues, mais pas pour chaque événement. En fait, l'horodatage tel que décrit dans ce document se produit uniquement pour une notification qui n'est émise que lorsque le nombre de correspondances d'évènements d'alarme décomptés pendant une fenêtre temporelle dépasse un seuil prédéterminé.

Un problème majeur, résultant de la complexité accrue des systèmes d'informations et des réseaux de données, est que certaines anomalies dégradent considérablement l'analyse d'évènements de réseaux synchronisés. Parmi ces anomalies, on trouve des incidents tels que des interruptions de service, les silences radio, les temps de latences trop longs cumulés à un faible débit de données.

A titre d'exemple, lorsqu'un silence radio, volontaire ou involontaire, survient dans toute ou partie du réseau, de nombreux messages peuvent être reçus par l'équipement de supervision lors de la fin du silence radio. Un silence radio correspond à un arrêt pendant un intervalle de temps des émissions et réceptions de messages. Cet évènement peut se produire par exemple dans des applications militaires. L'équipement de supervision doit alors traiter des milliers de messages arrivant massivement tous ensembles lors du retour à un fonctionnement normal du réseau après le silence radio. Pendant le silence radio des évènements ont pu se produire tels que des intrusions, qu'il est nécessaire de détecter à posteriori.

Actuellement, les corrélateurs ne sont pas développés pour répondre à de telles exigences, ils peuvent prendre alors de mauvaises décisions. Effectivement, tous les messages arrivant en même temps à l'entrée du corrélateur, peuvent être reçus dans le désordre. Ceci a pour conséquence que si le corrélateur prend la date de réception d'un message en compte, il risque de prendre une mauvaise décision ou de ne pas en prendre alors qu'il aurait dû générer une action en vue d'assurer la fiabilité des données transitant sur un réseau.

### RESUME DE L'INVENTION

L'invention permet de résoudre les inconvénients précités.

L'objet de l'invention concerne un procédé de fiabilisation de la supervision d'un réseau synchronisé pour la gestion de la génération d'une alarme telle que revendiqué dans la revendication 1. L'invention concerne un système de fiabilisation d'un réseau synchronisé tel que revendiqué dans la revendication 9. Des modes particuliers de réalisation préférés sont revendiqués dans les revendications dépendantes.

Un avantage de la détermination de l'intervalle de temps selon l'heure d'émission des évènements, et non de l'heure de réception, permet lors de la vérification du respect de la condition du scénario de prendre en considération de potentielles perturbations du réseau ou de dysfonctionnement des messages/évènements de supervision. Les évènements qui ont été émis auraient dû en toute logique être reçus selon un ordre et un intervalle de temps de réception donné. Tout écart permet de déduire un incident de réseau ou une rapide déconnexion d'un utilisateur.

Avantageusement, la première condition à respecter est la vérification que l'intervalle de temps d'émission est inférieur ou égal au seuil d'intervalle de temps du scénario.

Un avantage du procédé de l'invention est d'améliorer la génération de vraies alertes générées lors d'opérations de surveillance d'un réseau de données. L'amélioration résulte du fait que l'on compare les heures d'émission des évènements/ messages de supervision émis. De ce fait, l'algorithme est représentatif d'une réalité de faits des évènements survenant au niveau d'un poste du réseau.

Dans un mode de réalisation, la vraisemblance d'une séquence d'évènements reçus avec la première séquence du scénario comprend la comparaison du nombre d'évènements communs entre la séquence reçue et la séquence du scénario.

Un critère de vraisemblance peut comprendre avantageusement la comparaison du nombre d'évènements commun entre la première et la seconde séquence. Généralement, le corrélateur compare des évènements ayant un type précis. Le type peut être entendu comme la fonction de l'évènement, ce pourquoi il est émis.

Avantageusement, un premier intervalle de temps de réception est déterminé lorsque le procédé détecte une vraisemblance, le premier intervalle de temps étant déterminé entre :
- l'heure de réception la plus ancienne des évènements horodatés reçus et ;
- l'heure de réception la plus récente présumée des évènements horodatés reçus,
l'heure la plus récente présumée étant déduite du seuil de l'intervalle de temps et de la première séquence suite à la détection d'une vraisemblance,
le procédé comprenant :
- une seconde condition à respecter comprenant une vérification que la seconde séquence n'est pas reçue intégralement dans le premier intervalle de temps.
- une génération d'un premier message d'état du réseau lorsque la seconde condition du scénario est respectée.

Avantageusement, le second message d'état corrige l'état du réseau modifié par le premier message d'état.

Avantageusement, la modification de l'état du réseau est obtenue par la suppression du premier message d'état par la génération du second message d'état.

Lorsque le premier message d'état est une première alerte, la correction de l'état du réseau peut comprendre la génération d'une deuxième alerte d'état du réseau ou la suppression de la première alerte.

Selon les modes de réalisation, la génération de la première alerte vise à prévenir d'une anomalie de fonctionnement quant à la réception d'évènements qui auraient dû être reçus par le corrélateur. Le procédé de l'invention permet d'annuler ou de rendre caduque cette première alerte lorsque la séquence est en réalité bien reçue à l'issu d'un intervalle de temps plus long que le premier intervalle de temps de réception. La séquence est dite « bien reçue », lorsque la différence entre l'heure d'émission de l'évènement le plus ancien de la seconde séquence et l'heure d'émission de l'évènement le plus récent de la seconde séquence est inférieure au seuil d'intervalle de temps du scénario mémorisé dans le corrélateur.

Un scénario peut comprendre également selon les modes de réalisation en plus du nombre d'évènements d'une séquence et d'un seuil d'intervalle de temps :
- la définition d'un type pour chaque évènement;
- la taille des données constituant l'évènement ;
- un champ d'entête particulier ;
- un type d'évènement ;
- un protocole de transmission des événements ;
- un champ d'adresse source ou destination ;
- un identifiant utilisateur ;
- des données relatives au profil utilisateur.

Selon les modes de réalisations, le message d'état est :
- soit un message d'alerte ;
- soit un message ayant vocation à annihiler une fausse alerte déjà émise suite à la réception de toute ou partie d'une seconde séquence.

### BREVES DESCRIPTION DES FIGURES

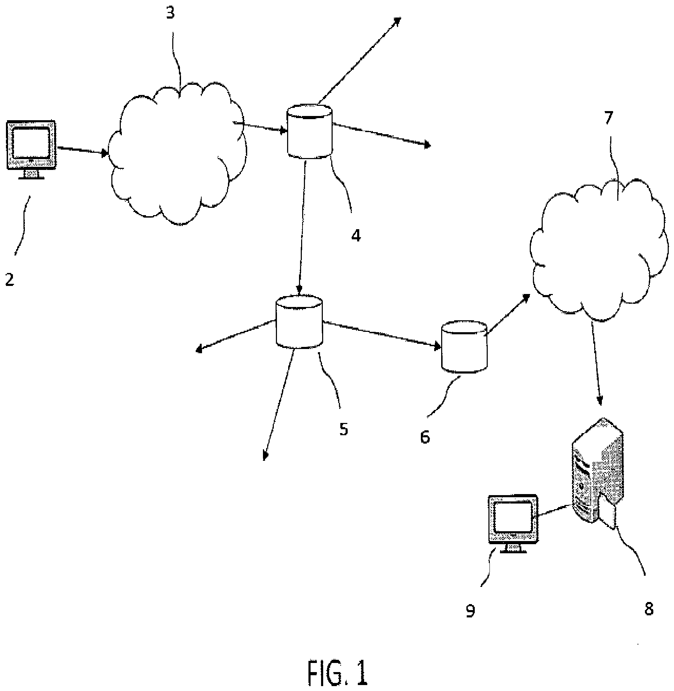

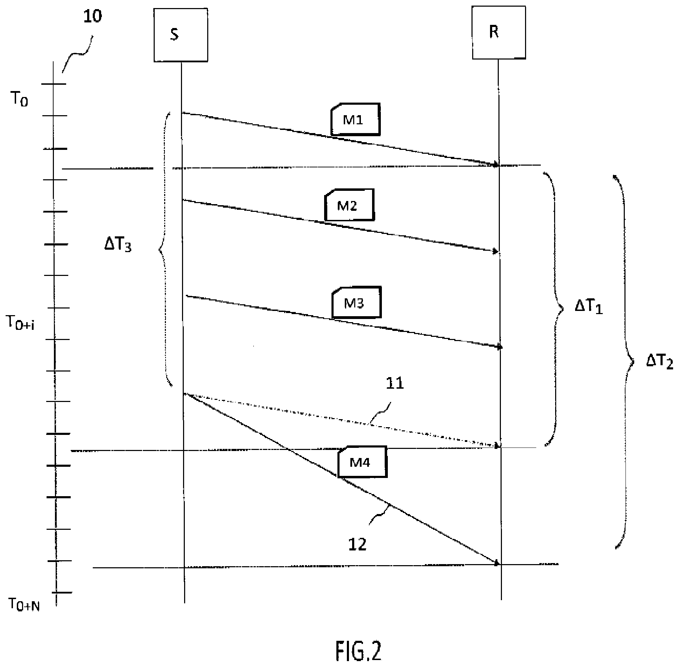

D'autres caractéristiques et avantages de l'invention ressortiront à la lecture de la description détaillée qui suit, en référence aux figures annexées, qui illustrent :
▪ figure 1 : une architecture réseau comprenant un outil de supervision des équipements réseaux ;
▪ figure 2 : une séquence de messages transitant dans le réseau susceptibles d'activer le procédé de l'invention.

### DESCRIPTION

Dans la suite de la description on nomme indifféremment « un événement » ou « un message de supervision étant représentatif d'un évènement ». Un « événement » est donc entendu comme la réception d'un certain type de message.

On nomme une « séquence », notée SQ, un ensemble de messages reçus ou d'évènements reçus selon un ordre de réception. L'ordre peut être établi par un horodatage soit selon l'heure d'arrivée, soit selon l'heure d'émission contenu dans un champ d'un message horodaté par la source.

Une séquence peut être définie par une suite de messages de différents types, ou de même type mais comprenant des champs de données différents. Ce qui peut différencier les messages d'une même séquence sont tous les attributs conventionnellement utilisés pour décrire un message tels que par exemple : une taille, un entête, un type, un protocole, un champ spécifique.

Un « scénario » est noté SC et comprend :
- une séquence SQ d'évènements. La séquence peut être ordonnée et chaque évènement peut être caractérisé par un ou des types, une ou des adresses source ou autres données,
- un seuil d'intervalle ΔTₛ de temps. Cette séquence est comparée à une séquence détectée et présumée connue suite à l'analyse d'une vraisemblance relatif à la réception par un corrélateur de la séquence ou d'une partie de la séquence,
- au moins une première condition, notée CD1, qui permet de vérifier notamment si un intervalle de temps mesuré d'une séquence ou une partie d'une séquence est supérieur ou inférieur au seuil d'intervalle ΔTₛ.

On nomme un « critère de vraisemblance » un ou des élément(s) qui permet(tent) de comparer une séquence connue d'un scénario à une séquence reçue d'évènements. Un critère peut être par exemple une combinaison des éléments suivants : le nombre d'évènements, leur type, leur ordre, etc. On parle plus généralement de « vraisemblance » lorsque l'on compare une séquence d'un scénario prédéfinie à une séquence partielle ou complète d'évènements reçus.

Lorsque la séquence de messages émis par la source et reçus par le récepteur est identique à la séquence d'un scénario stocké dans le récepteur, on dit qu'il y a une correspondance entre les deux séquences.

La figure 1 représente un réseau synchronisé comprenant différents éléments tels que des équipements de types routeurs 4, 5, 6, des stations de travail 2 dont une seule est représentée et des équipements de supervision 8, 9. Le réseau synchronisé comprend éventuellement des sous-réseaux 3 et 7.

Dans un cas simplifié, considérons qu'un centre de supervision comprend une console 9 et un serveur 8 de supervision. Le serveur 8 comprend des moyens de calculs permettant de mettre en oeuvre un corrélateur et permettant de traiter les évènements /messages de supervision du réseau. La console 9 permet à un opérateur d'administrer et de superviser le réseau.

La figure 2 représente des transferts de messages d'une source S qui est une station de travail, telle que la station 2 de la figure 1, vers un récepteur R, relatif aux éléments 8 et 9 de la figure 1. Le récepteur R comprend donc un corrélateur de messages du centre de supervision. On note indifféremment le récepteur R ou le corrélateur R dans la suite de la description par commodité.

Dans un réseau synchronisé, une base de temps commune est partagée, elle est notée 10 sur la figure 2.

Le corrélateur est configuré par un certain nombre de scénarios mémorisés dans une mémoire du centre de supervision.

A la réception d'un évènement, tel qu'un message de gestion, le corrélateur sélectionne un ou plusieurs scénario(i) en fonction des évènements déjà reçus et mémorisés pouvant correspondre à des évènements d'une séquence d'un ou plusieurs scénario(i). A chaque réception d'un évènement le corrélateur affine la sélection de scénario par une analyse d'une vraisemblance entre au moins une partie d'une séquence avec une autre séquence. La vraisemblance d'une séquence de messages reçus avec un scénario comprend la comparaison du nombre d'évènements communs entre la partie de la séquence reçue (ou la totalité de la séquence reçue) et la seconde séquence d'un scénario SC prédéfini. Un critère permettant de définir une séquence d'évènements est avantageusement le nombre d'évènements de la séquence. Généralement, le corrélateur compare des évènements ayant un type précis. Le type peut être entendu comme la fonction de l'évènement, ce pourquoi il est émis.

Le corrélateur peut entreprendre plusieurs analyses de vraisemblance si une partie d'une séquence reçue semble correspondre à différentes séquences de différents scénarios.

Une fois, au moins un scénario SC sélectionné, le corrélateur va appliquer la première condition CD1 associée au scénario SC sélectionné en déclenchant ou en ne déclenchant pas ou plus, une alarme représentative de l'état du réseau. L'alarme est un message d'état du réseau particulier qui vise à informer au moins une personne par la génération d'un indicateur d'erreur ou d'anomalie.

Un premier cas d'exemple peut être décrit à la lumière de la figure 2.

Dans ce premier exemple un scénario SC1 qui comprend :
- quatre évènements M1, M2, M3, M4
- un seuil d'intervalle ΔT_{S} qui est notée ΔT_{1,}
- une condition correspondant à l'émission d'un message d'état lorsque ces quatre messages sont reçus dans l'intervalle ΔT₁ à compter de la réception du premier évènement de la séquence.

Lorsque le corrélateur reçoit le premier évènement M1, il recherche les scénarios correspondant ayant un premier évènement M1. Si plusieurs scénarios sont sélectionnés répondant à ce critère, il discrimine d'autres scénarios à mesure que les évènements M2 et M3 sont reçus.

Si l'évènement M4 est reçu dans l'intervalle de temps ΔT_{1,} alors le récepteur peut générer un message d'état tel qu'une alerte. On suppose dans ce cas, que l'évènement M4 est reçu avant la flèche 11 représentée en pointillés sur la figure 2.

Un mode nominal de fonctionnement correspond au cas où les quatre évènements M1 à M4 sont reçus dans un intervalle de temps inférieure ou égal au seuil d'intervalle ΔTₛ du scénario. Le cas nominal implique pour le corrélateur d'agir en émettant une alerte lorsque cela ce produit.

La séquence S1 formée par les quatre messages M1, M2, M3, M4 traduit par exemple une intrusion dans le réseau ou représente par exemple quatre tentatives de connexion avec un faux mot de passe dans une interface de la station S, etc.

Le seuil d'intervalle de temps ΔTs correspond à un temps maximal pendant lequel on considère que si la séquence S1 est reçue alors une alerte doit être émise par le corrélateur R à un opérateur qui contrôle les évènements depuis la console 9.

On compare dans ce dernier cas, les heures de réception des évènements avec un premier intervalle de temps ΔT_{1.}

Dans un mode de réalisation ΔT₁ et ΔT_{S} peuvent être différents, notamment lorsque le corrélateur intègre une marge en le seuil d'intervalle et l'intervalle ΔT₁ représentant les heures de réception généralement constatées. On peut imaginer un cas de figure ou un temps de transmission est intégré dans le seuil ΔT_{S} qui serait différent entre les différents évènements M1, M2, M3 et M4 dans une certaine mesure.

Considérons que ΔTS = ΔT1 de manière à simplifier la description du présent mode de réalisation.

Dans le cas de la figure 2, l'évènement M4 aurait dû être reçu dans l'intervalle de réception ΔT_{S} en considérant un temps de transmission nominal, c'est-à-dire par exemple un temps de transmission calculé sur une moyenne. Le temps de transmission nominal peut être également choisi selon un cas représentatif d'un temps de transmission maximal constaté sur un certain nombre d'évènements dans des conditions opérationnelles de réseau non perturbé. Or du faite d'un incident réseau par exemple, le temps de transmission 12 de l'évènement M4 entraine sa réception dans un intervalle de temps de réception ΔT₂ supérieur au seuil d'intervalle de temps ΔT_{s.}

Le retard de la réception de l'évènement M4 a pour conséquence que l'alerte qui aurait dû être générée ne l'est pas.

Pourtant l'évènement M4 a été émis dans l'intervalle de temps d'émission ΔT₃ au niveau de la source, c'est à dire de la station de travail S. L'intervalle de temps d'émission ΔT₃ peut être égal ou inférieur au seuil d'intervalle de temps ΔTₛ dans le cas de la figure 2, c'est-à-dire que l'écart entre l'émission de l'évènement M1 et de l'évènement M4 est sensiblement égal au seuil d'intervalle de temps ΔTₛ.

Il y a donc eu un incident réseau retardant la réception du dernier évènement M4 définissant la séquence S1. En se basant sur une analyse par le corrélateur R des évènements reçus selon leur heure d'arrivée, et si cet incident réseau n'avait pas eu lieu, une alerte aurait été générée par ledit corrélateur R.

Ainsi le corrélateur R aurait manqué un évènement potentiellement important tel qu'une intrusion. Cet évènement n'aurait pas été affiché sur la console 9 de l'opérateur.

Ce cas de figure peut se produire, par exemple, lorsqu'un utilisateur se déconnecte du réseau alors que l'évènement M4 est sur le point d'être émis mais qu'il ne l'est pas. Lors de la reconnexion au réseau par l'utilisateur, de chez lui par exemple quelques heures plus tard, l'évènement est envoyé au récepteur R mais reçu hors de la fenêtre de temps définie par le seuil d'intervalle de temps ΔTₛ, c'est-à-dire la fenêtre ΔT₂.

Le procédé de l'invention permet au corrélateur de considérer l'heure d'émission horodatée dans un champ de l'évènement émis par la source S et reçu par le récepteur R. L'heure d'émission horodatée contenue dans l'évènement correspond à l'heure d'émission qui est horodatée lorsque l'évènement est émis par la source S.

Le procédé de l'invention permet de prendre en considération le champ horodaté d'heure d'émission des évènements émis et de prendre une décision à postériori de l'intervalle de temps ΔT₁ écoulé.

Lorsque le message M4 est reçu tardivement, le corrélateur R détermine l'intervalle d'émission ΔT₃ correspondant à l'intervalle entre l'heure d'émission du message M4 (le dernier évènement de la séquence) et l'heure d'émission du message M1 (le premier évènement de la séquence). Ainsi selon la première condition CD1 d'état associée au scénario, une alerte ou alarme pourra être générée ou pas même en cas de réception tardive du message M4 car ce sont les heures d'émission des messages qui sont comparées et non les heures de réception.

Un aspect important du procédé concerne l'analyse de vraisemblance d'une séquence en cours de réception non complètement reçue. Les messages/ évènements M1, M2, M3 sont stockés avec les heures d'émission desdits messages. Un compteur temps commence à s'incrémenter à compter de la réception du message M1. Le corrélateur va prendre en considération la première condition CD1 associée au scénario de sorte que si le message M4 est reçu, alors il suffit :
- de vérifier que la séquence S1 est reçue entièrement et ;
- de déterminer l'intervalle de temps d'émission à partir du compteur de temps de la séquence M1 à M4 pour déduire si la séquence est reçue dans le seuil d"intervalle de temps.

Il s'agit de comparer l'intervalle de temps ΔT₃ défini par les heures d'émission des messages le plus ancien avec le plus récent de la séquence avec le seuil ΔTs prédéfini dans le corrélateur pour un scénario donné.

Le procédé de l'invention permet également de réordonner des messages non reçus dans la séquence d'origine avec l'ordre de séquencement d'origine. Les heures d'émissions traduisent l'ordonnancement des messages dans lequel les messages doivent être reçus.

Dans un mode de réalisation, le procédé de l'invention permet de configurer un délai au-delà duquel un ou des évènements manquants à une séquence présumée attendue ne sont plus attendus. Il s'agit de définir un retard maximal acceptable du point de vue du récepteur R pendant lequel il prendra en compte l'évènement M4 par exemple même s'il a été envoyé correctement dans l'intervalle de temps ΔT₃ déterminé au regard des heures d'émission. Cette solution offre un compromis qui permet de prendre en compte les problèmes réseaux pendant un certain temps puis de ne plus les considérer au-delà d'un certain temps.

Un second cas d'exemple peut également être décrit à la lumière de la figure 2 et étayé selon une autre interprétation. Dans ce second cas, une seconde condition CD2 associée au scénario SC est vérifiée en plus de la première condition CD1.
Un premier intervalle ΔT₁ de temps de réception est déterminé lorsque le procédé détecte une vraisemblance à partir de la réception d'au moins un évènement M1. Le premier intervalle de temps ΔT₁ est déterminé entre :
- l'heure de réception la plus ancienne des évènements horodatés reçus et ;
- l'heure de réception la plus récente présumée des évènements horodatés reçus.

Dans ce cas, l'heure la plus récente présumée est déduite du seuil de l'intervalle de temps ΔT_{S} et de la première séquence S1 suite à la détection d'une vraisemblance. Comme dans le premier exemple, il est possible que ΔT_{S} et ΔT₁ soient différents mais ils seront préférentiellement identiques par simplicité d'implémentation de la méthode. C'est le cas dans le mode de réalisation détaillée ci-dessous.

Une seconde condition CD2 se base sur la réception d'une partie notée pS2 de la seconde séquence S2 et la première condition CD1 i se base sur la réception de la seconde séquence S2 en entier.

La seconde condition CD2 impose au corrélateur de générer une alerte s'il ne reçoit pas tous les évènements de M1 à M4 de la première séquence S1 définie par le scénario SC dans un premier intervalle ΔT₁ de temps inférieur ou égal au seuil d'intervalle ΔTₛ associé audit scénario SC. Ce mode de fonctionnement permet par exemple de contrôler activement qu'une fonction est opérationnelle. Effectivement, ce fonctionnement traduit le cas correspondant à la logique : « tant que les messages sont reçus convenablement en temps, alors tout fonctionne ». Ce premier intervalle ΔT₁ correspond à l'incrémentation d'un compteur dès la réception du premier évènement M₁ de la séquence. Dès que le premier intervalle ΔT₁ dépasse le seuil d'intervalle ΔTₛ, le corrélateur peut générer une alerte d'état du réseau M_{ET}.

La première condition CD1 impose que si l'intervalle de temps d'émission ΔT₃ déterminé à la réception de la totalité de la seconde séquence S2 est inférieur ou égal au seuil d'intervalle ΔTₛ, le corrélateur ne génère pas ou plus d'alerte si cette dernière n'a pas encore était émise ou entreprend de corriger la première alerte émise. Une correction peut consister en l'émission d'une seconde alerte d'état visant à corriger l'état du réseau.

On considère alors, le cas de la figure 2, où la configuration du corrélateur est différente en fonction du scénario sélectionné : une alerte est générée si moins de quatre messages (normalement attendus après l'analyse de la vraisemblance) sont reçus dans un intervalle de temps prédéfini ΔT₁. Après l'écoulement du premier intervalle de temps ΔT₁, une alerte est générée lorsque seulement trois évènements M1, M2 et M3, constituant une partie de la seconde séquence émise, des quatre évènements M1, M2, M3 et M4 définissant la première séquence S1 attendue sont reçus.

Si l'évènement M4 est reçu après le seuil d'intervalle de temps ΔTₛ l'alerte est déjà générée. L'évènement M4 peut être reçu avec du retard pour plusieurs raisons telles que par exemple un problème de congestion réseau ou de déconnexion du poste et de reconnexion ultérieure.

Dans une variante de réalisation de ce mode, l'alerte pourrait être générée si seulement M1 et M2 étaient reçus sans que M3 et M4 le soient dans l'intervalle de temps prédéfini. D'autres configurations auraient pu entrainer l'émission d'une alerte telle que par exemple l'unique réception de M1. Le corrélateur R est donc capable de reconnaître, en fonction du scénario sélectionné, une séquence présumée attendue :
- soit parce qu'elle doit être reçue régulièrement et qu'une non réception d'une séquence doit être signalée,
- soit parce qu'une partie de la séquence a été reçue et que le reste de la séquence n'a pas été reçu dans un intervalle de temps donné à compter de la réception de la première partie.

L'invention permet de contrôler l'heure d'émission des évènements et non pas uniquement l'heure de réception. Lorsque la différence entre l'heure d'émission de l'évènement M4 et de l'évènement M1 est comprise dans le seuil d'intervalle de temps ΔTs malgré que l'évènement M4 ait été reçu avec du retard, le procédé de l'invention permet d'entreprendre une action corrective.

Le procédé de l'invention permet dans ce cas de figure soit d'annuler l'alerte précédemment générée, soit de générer une seconde alerte permettant de prévenir un éventuel opérateur ou un algorithme de traitements que la première alerte ne doit pas être considérer.

En effet, selon la seconde interprétation de la figure 2, l'évènement M4 est reçu après le premier intervalle de temps ΔT1 sensiblement égal au seuil d'intervalle de temps ΔTs mais a été émis dans l'intervalle de temps d'émission ΔT₃. L'alerte n'aurait donc pas dû être émise par le corrélateur R. De ce fait, la comparaison des heures d'émissions dans un champ d'horodatage des évènements reçus d'une même séquence permet de déterminer l'intervalle d'émission compris entre l'heure d'émission de l'évènement le plus ancien M1 de la séquence et l'heure d'émission de l'évènement le plus récent M4 de la séquence.

Le corrélateur R peut effectuer différentes actions selon sa configuration. Il peut par exemple supprimer la première alerte lorsque M4 est reçu dans un intervalle d'émission inférieur ou égal au seuil ΔTs selon le référentiel d'heure d'émission de la source S. Il peut également, sans supprimer la première alerte, créer une seconde alerte signifiant que la première alerte émise est caduque.

Dans un mode de réalisation de l'invention, la console 8 permet d'afficher les deux états de la supervision du réseau. Un premier état reflète les évènements et les prises de décisions du corrélateur sur la base de temps du récepteur R. Un second état représente les évènements et les prises de décisions éventuellement corrigées du corrélateur en considérant les heures d'émission des évènements reçus. Cette double représentation permet à un opérateur de prendre en considération les fausses alertes générées par le corrélateur R à tort à cause d'anomalies dues au réseau.

D'une manière générale, le corrélateur R peut être configuré selon différents paramètres pour appliquer un scénario régissant les actions à entreprendre lorsqu'une séquence S2 est reçue.

Un scénario SC prédéfini comprend la définition d'une séquence d'évènements, d'un intervalle de temps et au moins une condition d'état. En outre, il peut comprendre la définition de champs adresse source ou destination, un utilisateur ou un profil utilisateur associé aux évènements générés tel que l'héritage des droits associés. Le scénario peut comprendre la définition d'un protocole ou d'une URL également.

Par exemple, le scénario peut définir des tentatives d'établissement d'une communication selon un protocole donné et non autorisé à partir d'un poste fixe identifié. Si plus de 3 tentatives d'établissement de la communication sont réalisées dans une période de 24h, alors une alerte est émise au niveau du corrélateur.

Cet exemple traduit le fait que si les trois tentatives se sont réalisées, il est nécessaire que les 3 évènements émis à la console de supervision 8, résultant des tentatives d'établissement de cette communication, arrivent dans un intervalle de temps de 24h.

Si un problème réseau intervient, il est alors nécessaire de pouvoir identifier les heures d'émission pour lever une alerte à bon escient.

Selon un mode de réalisation, le premier évènement d'une séquence d'un scénario permet d'activer le corrélateur si ce premier évènement est effectivement reçu. L'activation du corrélateur correspond à un état dans lequel sur réception du premier évènement d'une séquence connue du corrélateur, il entreprend les actions suivantes :
- mise en route d'un compteur temps ;
- comparaison des évènements attendus de la séquence et de ceux reçus ;
- enregistrement des évènements reçus correspondant à la séquence prédéfinie.

Les séquences prédéfinies associées respectivement à des scénarios sont stockées dans le corrélateur.

Potentiellement, le corrélateur peut comprendre N séquences commençant par l'évènement M1 qui vient d'être reçu. Chacune des N séquences est associée à un seuil d'intervalle de temps donné ΔTsᵢ. Le corrélateur permet de comparer la suite des événements reçus avec les séquences des scénarios présélectionnés lui permettant de déclencher au moins un compteur temps local dont l'origine correspond au champ d'heure du premier évènement M1 de la séquence.

Selon un mode de réalisation, l'horodatage source est généré par une application de l'équipement source. Dans un autre mode de réalisation, l'heure d'émission est générée par un proxy connecté au réseau et à une station de travail. Cette solution permet par exemple d'homogénéiser au niveau d'un proxy l'horodatage des évènements en émission et permet de s'affranchir des dérives d'horloges de chaque station de travail les unes vis-à-vis des autres.

## Revendications

1. Procédé de fiabilisation de la supervision d'un réseau synchronisé pour la gestion de la génération d'une alarme, le procédé comprenant:
• une acquisition d'un ensemble d'évènements (M1, M2, M3, M4) par un équipement récepteur (R), lesdits événements (M1, M2, M3, M4) comprenant un horodatage correspondant à l'heure d'émission dudit événement ;
• un stockage des événements (M1, M2, M3, M4) reçus par l'équipement récepteur (R) ;
• un stockage d'au moins un scénario (SC) prédéfini comprenant une première séquence (S1) d'événements à recevoir dans un seuil d'intervalle de temps (ΔT_{S}) et une première condition (CD1) à respecter, la première condition (CD1) permettant de vérifier si un intervalle de temps mesuré d'une séquence ou une partie d'une séquence est supérieur ou inférieur au seuil d'intervalle de temps (ΔTₛ) ;
• une détection d'au moins une partie (pS2) d'une seconde séquence (S2) d'évènements reçus vraisemblable à la première séquence (S1);
le procédé étant **caractérisé en ce qu'**il comporte les étapes suivantes :
• une détermination d'un second intervalle (ΔT₃) de temps d'émission de la deuxième séquence (S2) entre :
∘ l'heure d'émission la plus ancienne des événements horodatés et ;
∘ l'heure d'émission la plus récente des événements horodatés,
la seconde séquence (S2) reçue correspondant à la première séquence (S1) du scénario prédéfini ;
• une vérification du respect de la première condition (CD1) du scénario (SC) en fonction du second intervalle de temps d'émission (ΔT₃) déterminé et du seuil d'intervalle de temps (ΔT_{S}) du scénario (SC), la première condition à respecter étant la vérification que l'intervalle de temps d'émission (ΔT₃) est inférieur ou égal au seuil d'intervalle de temps (ΔT_{S}) du scénario (SC) et ;
• une génération d'un second message d'état (M2_{ET}) du réseau lorsque la première condition (CD1) du scénario est respectée.

2. Procédé de fiabilisation selon la revendication précédente, **caractérisé en ce que** la vraisemblance d'une séquence d'évènements reçus (S2) avec la première séquence (S1) du scénario (SC) comprend la comparaison du nombre d'évènements (M1, M2, M3, M4) communs entre une partie de la séquence reçue (pS2) et la première séquence (S1).

3. Procédé de fiabilisation selon la revendication 2, **caractérisé en ce que** la vraisemblance comprend la comparaison du type de chaque événement reçu (M1, M2, M3, M4) et leur ordonnancement entre une partie de la seconde séquence (pS2) et la première séquence (S1).

4. Procédé de fiabilisation selon l'une quelconque des revendications 1 à 3, **caractérisé en ce qu'**un premier intervalle (ΔT₁) de temps de réception est déterminé lorsque le procédé détecte une vraisemblance, le premier intervalle de temps (ΔT₁) étant déterminé entre :
• l'heure de réception la plus ancienne des événements horodatés reçus et ;
• l'heure de réception la plus récente présumée des événements horodatés reçus,
l'heure la plus récente présumée étant déduite du seuil de l'intervalle de temps (ΔT_{S}) et de la première séquence (S1) suite à la détection d'une vraisemblance,
le procédé comprenant :
• une seconde condition (CD2) à respecter comprenant une vérification que la seconde séquence (S2) n'est pas reçue intégralement dans le premier intervalle de temps (ΔT₁).
• une génération d'un premier message d'état (M1_{ET}) du réseau lorsque la seconde condition (CD2) du scénario est respectée.

5. Procédé de fiabilisation selon la revendication 4, **caractérisé en ce que** le second message d'état (M2_{ET}) corrige l'état du réseau modifié par le premier message d'état (M1_{ET}).

6. Procédé de fiabilisation selon l'une quelconque des revendications 4 à 5, **caractérisé en ce que** la modification de l'état du réseau est obtenue par la suppression du premier message d'état (M1_{ET}) par la génération du second message d'état (M2_{ET}).

7. Procédé de fiabilisation selon l'une quelconque des revendications 1 à 6, **caractérisé en ce qu'**un scénario comprend en outre pour une séquence donnée : un nombre d'évènements définissant la séquence, la définition d'un type d'événement pour chacun d'entre eux.

8. Procédé de fiabilisation selon l'une quelconque des revendications 1, à 7, **caractérisé en ce qu'**un scénario comprend au moins un des éléments supplémentaires suivants : un champ d'entête, une taille, un type, un identifiant utilisateur, un protocole de transmission, des données relatives au profil utilisateur.

9. Système de fiabilisation d'un réseau synchronisé comprenant un équipement récepteur (R) permettant la réception d'évènements de supervision dudit réseau, ledit système comprenant une mémoire pour le stockage d'au moins un scénario (SC) définissant une première séquence (S1) d'évènements de supervision dans au moins un premier intervalle de temps prédéfini (ΔT₂), un calculateur adapté pour:
• comparer selon un critère de vraisemblance une seconde séquence (S2) d'évènements reçus avec au moins la première séquence (S1),
ledit système étant **caractérisé en ce que** ledit calculateur est adapté pour :
• extraire des champs de données correspondant à des heures d'émission des événements horodatés reçus et permettant de comparer lesdits champs de différents événements afin de déterminer un intervalle de temps d'émission (ΔT₃) de la seconde séquence (S2) ;
• vérifier le respect d'une première condition (CD1) du scénario (SC), la première condition (CD1) permettant de vérifier si un intervalle de temps mesuré d'une séquence ou une partie d'une séquence est supérieur ou inférieur au seuil d'intervalle de temps (ΔTₛ), ladite vérification étant réalisée en fonction de l'intervalle de temps d'émission déterminé (ΔT₃) et du seuil d'intervalle de temps du scénario (ΔT_{S}), la première condition à respecter étant la vérification que l'intervalle de temps d'émission (ΔT₃) est inférieur ou égal au seuil d'intervalle de temps (ΔT_{S}) du scénario (SC) ;
• générer un second message d'état (M1_{ET}) du réseau lorsque la première condition est respectée du scénario (SC).

10. Système de fiabilisation selon la revendication 9 **caractérisé en ce que** le message d'état est :
• soit un message d'alerte (C_{ET});
• soit un message ayant vocation à annihiler une fausse alerte déjà émise suite à la réception de toute ou partie d'une seconde séquence (S2).

## Patentansprüche

1. Verfahren zur Erhöhung der Zuverlässigkeit der Überwachung eines synchronisierten Netzes für die Verwaltung der Erzeugung eines Alarms, wobei das Verfahren umfasst:
• eine Erfassung einer Gruppe von Ereignissen (M1, M2, M3, M4) durch eine Empfangsausrüstung (R), wobei die Ereignisse (M1, M2, M3, M4) eine Zeitmarke umfassen, die der Sendezeit des Ereignisses entspricht,
• eine Speicherung der von der Empfangsausrüstung (R) erhaltenen Ereignisse (M1, M2, M3, M4),
• eine Speicherung von mindestens einem vorher festgelegten Szenario (SC), umfassend eine erste Sequenz (S1) von in einer Zeitintervallschwelle (ΔT_{S}) zu empfangenden Ereignissen und eine erste einzuhaltende Bedingung (CD1), wobei die erste Bedingung (CD1) erlaubt zu überprüfen, ob ein gemessenes Zeitintervall einer Sequenz oder eines Teils einer Sequenz größer oder kleiner als die Zeitintervallschwelle (ΔT_{S}) ist,
• eine Ermittlung von mindestens einem Teil (pS2) einer zweiten Sequenz (S2) von Ereignissen, die wahrscheinlich in der ersten Sequenz (S1) empfangen wurden,
wobei das Verfahren **dadurch gekennzeichnet ist, dass** es die folgenden Schritte aufweist:
• eine Bestimmung eines zweiten Sendezeitintervalls (ΔT₃) der zweiten Sequenz (S2) zwischen:
∘ der ältesten Sendezeit der zeitgestempelten Ereignisse, und
∘ der jüngsten Sendezeit der zeitgestempelten Ereignisse,
wobei die empfangene zweite Sequenz (S2) der ersten Sequenz (S1) des vorher festgelegten Szenarios entspricht;
• eine Überprüfung der Einhaltung der ersten Bedingung (CD1) des Szenarios (SC) in Abhängigkeit vom zweiten bestimmten Sendezeitintervall (ΔT₃) und von der Zeitintervallschwelle (ΔT_{S}) des Szenarios (SC), wobei die erste einzuhaltende Bedingung die Überprüfung ist, dass das Sendezeitintervall (ΔT₃) kleiner oder gleich der Zeitintervallschwelle (ΔT_{S}) des Szenarios (SC) ist, und
• eine Erzeugung einer zweiten Zustandsmeldung (M2_{ET}) des Netzes, wenn die erste Bedingung (CD1) des Szenarios eingehalten ist.

2. Verfahren zur Erhöhung der Zuverlässigkeit nach vorangehendem Anspruch, **dadurch gekennzeichnet, dass** die Wahrscheinlichkeit einer Sequenz von mit der ersten Sequenz (S1) des Szenarios (SC) empfangenen Ereignissen (S2) den Vergleich der Anzahl von Ereignissen (M1, M2, M3, M4) umfasst, die zwischen einem empfangenen Teil der Sequenz (pS2) und der ersten Sequenz (S1) gemeinsam sind.

3. Verfahren zur Erhöhung der Zuverlässigkeit nach Anspruch 2, **dadurch gekennzeichnet, dass** die Wahrscheinlichkeit den Vergleich des Typs jedes empfangenen Ereignisses (M1, M2, M3, M4) und deren Zeitablaufsteuerung zwischen einem Teil der zweiten Sequenz (pS2) und der ersten Sequenz (S1) umfasst.

4. Verfahren zur Erhöhung der Zuverlässigkeit nach einem der Ansprüche 1 bis 3, **dadurch gekennzeichnet, dass** ein erstes Empfangszeitintervall (ΔT₁) bestimmt wird, wenn das Verfahren eine Wahrscheinlichkeit ermittelt, wobei das erste Zeitintervall (ΔT₁) bestimmt wird zwischen:
• der ältesten Empfangszeit der empfangenen zeitgestempelten Ereignisse, und
• der mutmaßlichen jüngsten Empfangszeit der empfangenen zeitgestempelten Ereignisse,
wobei die mutmaßliche jüngste Zeit von der Zeitintervallschwelle (ΔT_{S}) und von der ersten Sequenz (S1) infolge der Ermittlung einer Wahrscheinlichkeit abgeleitet wird,
wobei das Verfahren umfasst:
• eine zweite einzuhaltende Bedingung (CD2), umfassend eine Überprüfung, dass die zweite Sequenz (S2) nicht vollständig im ersten Zeitintervall (ΔT₁) empfangen wurde,
• eine Erzeugung einer ersten Zustandsmeldung (M1_{ET}) des Netzes, wenn die zweite Bedingung (CD2) des Szenarios eingehalten wurde.

5. Verfahren zur Erhöhung der Zuverlässigkeit nach Anspruch 4, **dadurch gekennzeichnet, dass** die zweite Zustandsmeldung (M2_{ET}) den von der ersten Zustandsmeldung (M1_{ET}) geänderten Zustand des Netzes korrigiert.

6. Verfahren zur Erhöhung der Zuverlässigkeit nach einem der Ansprüche 4 bis 5, **dadurch gekennzeichnet, dass** die Änderung des Zustands des Netzes durch Unterdrückung der ersten Zustandsmeldung (M1_{ET}) durch die Erzeugung der zweiten Zustandsmeldung (M2_{ET}) erhalten wird.

7. Verfahren zur Erhöhung der Zuverlässigkeit nach einem der Ansprüche 1 bis 6, **dadurch gekennzeichnet, dass** ein Szenario ferner für eine bestimmte Sequenz umfasst: eine Anzahl von Ereignissen, welche die Sequenz definieren, die Definition eines Ereignistyps für jedes von ihnen.

8. Verfahren zur Erhöhung der Zuverlässigkeit nach einem der Ansprüche 1 bis 7, **dadurch gekennzeichnet, dass** ein Szenario mindestens eins der folgenden zusätzlichen Elemente umfasst: ein Kopffeld, eine Größe, einen Typ, ein Benutzerkennwort, ein Übertragungsprotokoll, Daten in Bezug auf das Benutzerprofil.

9. System zur Erhöhung der Zuverlässigkeit eines synchronisierten Netzes, umfassend eine Empfangsausrüstung (R), welche den Empfang von Überwachungsereignissen des Netzes erlaubt, wobei das System einen Speicher für die Speicherung von mindestens einem Szenario (SC) umfasst, welches eine erste Sequenz (S1) von Überwachungsereignissen in mindestens einem vorher festgelegten ersten Zeitintervall (ΔT₂) definiert, einen Rechner, der geeignet ist, um:
• gemäß einem Wahrscheinlichkeitskriterium eine zweite Sequenz (S2) empfangener Ereignisse mit mindestens der ersten Sequenz (S1) zu vergleichen,
wobei das System **dadurch gekennzeichnet ist, dass** der Rechner geeignet ist, um:
• aus Feldern Daten zu extrahieren, die Sendezeiten der empfangenen zeitgestempelten Ereignisse entsprechen und erlauben, die Felder verschiedener Ereignisse zu vergleichen, um ein Sendezeitintervall (ΔT₃) der zweiten Sequenz (S2) zu bestimmen,
• die Einhaltung einer ersten Bedingung (CD1) des Szenarios (SC) zu überprüfen, wobei die erste Bedingung (CD1) erlaubt zu überprüfen, ob ein gemessenes Zeitintervall einer Sequenz oder eines Teils einer Sequenz größer oder kleiner als die Zeitintervallschwelle (ΔT_{S}) ist, wobei die Überprüfung in Abhängigkeit von dem bestimmten Sendezeitintervall (ΔT₃) und von der Zeitintervallschwelle (ΔT_{S}) des Szenarios durchgeführt wird, wobei die erste einzuhaltende Bedingung die Überprüfung ist, dass das Sendezeitintervall (ΔT₃) kleiner oder gleich der Zeitintervallschwelle (ΔT_{S}) des Szenarios (SC) ist,
• eine zweite Zustandsmeldung (M1_{ET}) des Netzes zu erzeugen, wenn die erste Bedingung von dem Szenario (SC) eingehalten ist.

10. System zur Erhöhung der Zuverlässigkeit nach Anspruch 9, **dadurch gekennzeichnet, dass** die Zustandsmeldung ist:
• entweder eine Warnmeldung (C_{ET}),
• oder eine Meldung, welche die Aufgabe hat, eine falsche Warnung zu löschen, die bereits infolge des Empfangs der gesamten oder eines Teils einer zweiten Sequenz (S2) ausgegeben wurde.

## Claims

1. A method for safeguarding the supervision of a synchronised network for managing an alarm generation, the method comprising:
• acquiring a set of events (M1, M2, M3, M4) by a receiving equipment (R), said events (M1, M2, M3, M4) comprising a timestamp corresponding to the emitting time of said event;
• storing the events (M1, M2, M3, M4) received by the receiving equipment (R);
• storing at least one predefined scenario (SC) comprising a first sequence (S1) of events to be received in a time interval threshold (ΔTₛ) and a first condition (CD1) to be fulfilled, the first condition (CD1) being for checking whether a measured time interval of a sequence or a part of a sequence is higher than or lower than the time interval threshold (ΔTₛ);
• detecting at least one part (pS2) of a second sequence (S2) of received events likely to the first sequence (S1);
the method being **characterised in that** it includes the following steps:
• determining a second interval (ΔT₃) of emitting time of the second sequence (S2) between:
∘ the oldest emitting time of the time-stamped events; and
∘ the latest emitting time of the time-stamped events,
the second received sequence (S2) corresponding to the first sequence (S1) of the predefined scenario;
• checking the fulfilment of the first condition (CD1) of the scenario (SC) as a function of the determined second emitting time interval (ΔT₃) and the time interval threshold (ΔTₛ) of the scenario (SC), the first condition to be fulfilled being checking that the emitting time interval (ΔT₃) is lower than or equal to the time interval threshold (ΔTₛ) of the scenario (SC); and
• generating a second state message (M2_{ET}) of the network when the first condition (CD1) of the scenario is fulfilled.

2. The safeguarding method according to the preceding claim, **characterised in that** the likelihood of a sequence of received events (S2) with the first sequence (S1) of the scenario (SC) comprises comparing the number of events (M1, M2, M3, M4) being common between a part of the received sequence (pS2) and the first sequence (S1).

3. The safeguarding method according to claim 2, **characterised in that** the likelihood comprises comparing the type of each received event (M1, M2, M3, M4) and scheduling them between a part of the second sequence (pS2) and the first sequence (S1).

4. The safeguarding method according to any of claims 1 to 3, **characterised in that** a first receiving time interval (ΔT₁) is determined when the method detects a likelihood, the first time interval (ΔT₁) being determined between:
• the oldest time of receiving the received time-stamped events; and
• the latest presumed time of receiving the received time-stamped events, the presumed latest time being deduced from the time interval threshold (ΔTₛ) and the first sequence (S1) following the detection of a likelihood,
the method comprising:
• a second condition (CD2) to be fulfilled comprising checking that the second sequence (S2) is not fully received in the first time interval (ΔT₁),
• generating a first state message (M1_{ET}) of the network when the second condition (CD2) of the scenario is fulfilled.

5. The safeguarding method according to claim 4, **characterised in that** the second state message (M2_{ET}) corrects the network state modified by the first state message (M1_{ET}).

6. The safeguarding method according to any of claims 4 and 5, **characterised in that** modifying the network state is achieved by removing the first state message (M1_{ET}) by generating the second state message (M2ET).

7. The safeguarding method according to any of claims 1 to 6, **characterised in that** a scenario further comprises for a given sequence: a number of events defining the sequence, the definition of an event type for each of them.

8. The safeguarding method according to any of claims 1 to 7, **characterised in that** a scenario comprises at least one of the following further elements: a header field, a size, a type, a user identifier, a transmission protocol, data relating to the user profile.

9. A system for safeguarding a synchronised network comprising a receiving equipment (R) for receiving events for the supervision of said network, said system comprising a memory for storing at least one scenario (SC) defining a first sequence (S1) of supervision events in at least one predefined time interval (ΔT₂), a calculator adapted to:
• compare according to a likelihood criterion a second sequence (S2) of received events with at least the first sequence (S1),
said system being **characterised in that** said calculator is adapted to:
• extract data fields corresponding to emitting times of the received time-stamped events and for comparing said fields of different events in order to determine an emitting time interval (ΔT₃) of the second sequence (S2);
• check that a first condition (CD1) of the scenario (SC) is fulfilled, the first condition (CD1) being for checking whether a measured time interval of a sequence or a part of a sequence is higher or lower than the time interval threshold (ΔTₛ), said checking being made as a function of the determined emitting time interval (ΔT₃) and the time interval threshold (ΔTₛ) of the scenario, the first condition to be fulfilled being checking that the emitting time interval (ΔT₃) is lower than or equal to the time interval threshold (ΔTₛ) of the scenario (SC);
• generate a second state message (M1_{ET}) of the network when the first condition of the scenario (SC) is fulfilled.

10. The safeguarding system according to claim 9, **characterised in that** the state message is:
• either an alert message (CET);
• or a message intended to annihilate a wrong alert already emitted following the reception of all or part of a second sequence (S2).
